# EUROPÄISCHE PATENTSCHRIFT

(11) **EP 3 567 264 B1**
(45) Veröffentlichungstag und Bekanntmachung des Hinweises auf die Patenterteilung: **01.12.2021**
(21) Anmeldenummer: 19172161.2
(22) Anmeldetag: 02.05.2019
(51) Int. Cl.: F16B 5/02, F16B 43/00, F16B 41/00, F16B 37/04

(54) **BEFESTIGUNGSSYSTEM**
FASTENING SYSTEM
SYSTÈME DE FIXATION

(30) Priorität: 07.05.2018 DE 102018110924
(43) Veröffentlichungstag der Anmeldung: 13.11.2019
(73) Patentinhaber: fischerwerke GmbH & Co. KG, 72178 Waldachtal (DE)
(72) Erfinder: Hacker, Oliver, 72227 Egenhausen (DE); Schneider, Mattias, 72213 Altensteig (DE); Krumbeck, Markus, 71159 Mötzingen (DE); Klauser, Philipp, 71131 Jettingen (DE)
(74) Vertreter: Suchy, Ulrich Johannes

(56) Entgegenhaltungen:
- DE-A1- 2 712 670
- DE-C1- 3 132 132

## Beschreibung

Die Erfindung betrifft ein Befestigungssystem zur Montage und Justage eines Anbauteils an einem Befestigungsgrund mit den Merkmalen des Oberbegriffs des Anspruchs 1, sowie ein Verfahren zur Montage und Justage eines Anbauteils an einem Befestigungsgrund mit den Merkmalen des Oberbegriffs des Anspruchs 7.

In der Patentschrift DE 31 32 132 C1 ist eine Schraubbefestigung zwischen einem Anbauteil und einem Befestigungsgrund dargestellt. Das Anbauteil ist über eine Halteschraube, die in eine Durchgangsbohrung im Anbauteil eingreift und in ein Sackloch im Befestigungsgrund eingeschraubt ist, am Befestigungsgrund gehalten. Eine Haltescheibe ist koaxial zwischen einer Unterseite eines Schraubenkopfs und einer Oberfläche des Anbauteils angeordnet und überträgt eine Spannkraft der Schraube auf das Anbauteil und auf den Befestigungsgrund. Auf einer Oberseite des Schraubenkopfs ist eine im Durchmesser identisch zur Haltescheibe ausgestaltete Gegenabstützscheibe koaxial zur Schraube und zur Haltescheibe angeordnet und mit der Haltescheibe und dem Anbauteil durch Befestigungsschrauben verschraubt. Die Gegenabstützscheibe ist derart ausgestaltet, dass ein Teil der Gegenabstützscheibe einen Teil der Oberseite des Schraubenkopfs überdeckt, so dass dieser Teil ein Widerlager für die Schraube bildet, wenn die Schraube aus dem Befestigungsgrund herausgedreht wird. Dadurch ist es möglich, durch Herausdrehen der Halteschraube aus dem Befestigungsgrund, das Anbauteil vom Untergrund gezielt zu beabstanden und somit das Anbauteil gegenüber dem Befestigungsgrund auszurichten.

Nachteilig an dem bekannten Befestigungssystem ist, dass die Haltescheibe und die Gegenabstützscheibe unterschiedlich ausgestaltet sind und somit nicht in einem einzigen Herstellungsprozess gefertigt werden können. Zudem muss ein Anwender immer darauf achten, eine Haltescheibe mit einer passenden Gegenabstützscheibe zu kombinieren.

Aufgabe der Erfindung ist, ein alternatives Befestigungssystem zu schaffen, welches einfach herzustellen ist und dem Anwender eine größtmögliche Benutzerfreundlichkeit bietet.

Diese Aufgabe wird erfindungsgemäß durch ein Befestigungssystem mit den Merkmalen des Anspruchs 1 sowie durch ein Verfahren mit den Merkmalen des Anspruchs 7 gelöst. Die Erfindung schlägt ein Befestigungssystem zur Montage und Justage eines Anbauteils an einem Befestigungsgrund vor, welches ein erstes Spannelement aufweist, das insbesondere aus einem Kunststoff oder aus einem Metall besteht. Das Spannelement ist als ein Volumenkörper ausgestaltet, der eine insbesondere plane Deckfläche, eine insbesondere plane, zur Deckfläche insbesondere parallel orientierte Grundfläche sowie eine die Grund- und Deckfläche verbindende Seitenfläche aufweist. Die Seitenfläche ist bezüglich der Grund- und der Deckfläche insbesondere in einem rechten Winkel orientiert. Insbesondere sind die Deckfläche und die Grundfläche als kreisrunde Scheiben mit insbesondere identischem Kreisdurchmesser ausgestaltet, wodurch das erste Spannelement die Gestalt eines Zylinders aufweist. Dadurch, dass eine Höhe der Seitenfläche insbesondere um ein Mehrfaches geringer ist, als ein Durchmesser der Grund- und/oder der Deckfläche, weist das erste Spannelement insbesondere die Gestalt einer kreisrunden Zylinderscheibe auf. Das Spannelement kann jedoch auch als Dreikant-, Vierkant-, oder generell als Mehrkantscheibe ausgestaltet sein. Zudem können an den Übergängen, an denen die Grundfläche und die Deckfläche durch die Seitenfläche verbunden sind, Radien oder Fasen angeordnet sein. Eine erste Spannelementachse ist insbesondere in einem rechten Winkel zur Grund- und/oder Deckfläche des Spannelements orientiert. Entlang der ersten Spannelementachse, die insbesondere in einem Zentrum des ersten Spannelements angeordnet ist und um welche das erste Spannelement insbesondere eine Drehsymmetrie aufweist, erstreckt sich eine erste, insbesondere einen kreisrunden Querschnitt aufweisende, primäre Durchgangsöffnung. Zudem umfasst das erste Spannelement mindestens eine erste, insbesondere einen kreisrunden Querschnitt aufweisende, erste sekundäre Durchgangsöffnung, die sich entlang einer ersten Sekundärachse vorzugsweise parallel zu der ersten Spannelementachse erstreckt, oder einen Winkel von bis zu 60° zu dieser einschließt. Die erste sekundäre Durchgangsöffnung ist bezüglich der ersten Spannelementachse radial derart versetzt angeordnet, dass die erste primäre Durchgangsöffnung und die erste sekundäre Durchgangsöffnung voneinander räumlich getrennt sind. Insbesondere weist das erste Spannelement zwei, bezüglich der Spannelementachse gespiegelte erste sekundäre Durchgangsöffnungen auf. Insbesondere weist das erste Spannelement jedoch mindestens drei, vorteilhafterweise jedoch sechs erste sekundäre Durchgangsöffnungen auf, die bezüglich der ersten Spannelementachse jeweils einen gleichen Abstand aufweisen und um die erste Spannelementachse in Umfangsrichtung gleichverteilt sind. Ein Durchmesser der ersten primären Durchgangsöffnung entspricht insbesondere einem Mehrfachen des Durchmessers der ersten sekundären Durchgangsöffnung. Eine kreisrunde Ausgestaltung der ersten primären Durchgangsöffnung und der ersten sekundären Durchgangsöffnung ist zudem nicht zwingend. Anders gesprochen können sowohl die erste primäre Durchgangsöffnung als auch die erste sekundäre Durchgangsöffnung beispielsweise den Querschnitt eines Mehrkant aufweisen.

Das Befestigungssystem umfasst des Weiteren ein zweites, insbesondere scheibenartiges, Spannelement, das insbesondere aus einem Metall oder Kunststoff besteht. Das zweite Spannelement ist ebenfalls als ein Volumenkörper mit einer insbesondere planen Grundfläche, einer parallel dazu orientierten, insbesondere planen Deckfläche und eine die Grund und die Deckfläche verbindende Seitenfläche ausgestaltet. Insbesondere ist das zweite Spannelement ebenfalls als ein Zylinder, insbesondere als eine Zylinderscheibe ausgestaltet. Das zweite Spannelement weist zudem eine zweite Spannelementachse auf, die insbesondere in einem rechten Winkel zur Grund- und/oder Deckfläche des zweiten Spannelements orientiert ist. Zudem weist das zweite Spannelement eine, insbesondere im Zentrum des zweiten Spannelements angeordnete und insbesondere parallel zur zweiten Spannelementachse orientierte zweite primäre Durchgangsöffnung auf. Ebenfalls ist mindestens eine zweite sekundäre Durchgangsöffnung im zweiten Spannelement angeordnet, die sich in Richtung einer zweiten Sekundärachse erstreckt. Die zweite Sekundärachse ist insbesondere parallel zur zweiten Spannelementachse orientiert oder schließt einen Winkel von bis zu 60° zu dieser ein und ist radial bezüglich dieser versetzt.

In einer bevorzugten Ausgestaltung der Erfindung sind das erste und das zweite Spannelement geometrisch identisch ausgestaltet. Hierunter ist insbesondere zu verstehen, dass das erste und das zweite Spannelement identisch scheibenartig ausgestaltet sind und jeweils eine identische Anzahl an primären Durchgangsöffnungen und sekundären Durchgangsöffnungen aufweisen, die deckungsgleich auf den Spannelementen angeordnet sind. Zudem weisen die erste primäre Durchgangsöffnung und die zweite primäre Durchgangsöffnung sowie die erste sekundäre Durchgangsöffnung und die zweite sekundäre Durchgangsöffnung identische Durchmesser und Querschnitte auf.

Zur Fixierung des Anbauteils am Befestigungsgrund umfasst das Befestigungssystem weiter eine Primärschraube, bei welcher es sich insbesondere um eine Betonschraube handelt, mit einem Einbringende, einem Werkzeugende, einem sich vom Einbringende in Richtung des Werkzeugendes erstreckender Schaft mit einem Gewinde, sowie einem Schraubenkopf am Werkzeugende. Die Primärschraube ist in eine Einbringrichtung mit dem Einbringende voraus in das Anbauteil und in den Befestigungsgrund einbringbar. An einer Unterseite des Schraubenkopfs, welche dem Einbringende zugewandt ist, weist der Schraubenkopf vorzugsweise einen kreisrunden umlaufenden Bund, insbesondere eine an der Unterseite des Schraubenkopfs angeprägte Unterlegscheibe auf. Weiter ist am Schraubenkopf eine Werkzeugaufnahme angeordnet. Diese kann als ein Mehrkant zur Aufnahme eines Ring- oder Gabelschlüssels oder einer Stecknuss ausgestaltet sein. Jedoch ist auch eine Ausgestaltung als Schlitz-, Kreuzschlitz oder als Innenmehrkant, insbesondere Innensechskant möglich, der sich von einer Oberseite des Schraubenkopfes in Richtung der Unterseite des Schraubenkopfes in den Schraubenkopf hinein erstreckt.

Ein Durchmesser des Schraubenschafts korrespondiert derart mit dem Durchmesser der ersten primären Durchgangsöffnung des ersten Spannelements und dem Durchmesser der zweiten primären Durchgangsöffnung des zweiten Spannelements, dass das erste Spannelement und das zweite Spannelement über die erste primäre Durchgangsöffnung auf den Schaft mit dem Gewinde aufsteckbar sind.

Das zweite Spannelement kann in Einbringrichtung auf den Schraubenkopf aufgesteckt werden und ist an dem ersten Spannelement und dem Anbauteil fixierbar. Hierzu umfasst das Befestigungssystem mindestens ein, insbesondere jedoch mehrere, Sekundärbefestigungselemente bei welchen es sich insbesondere um Schrauben handelt. Das Sekundärbefestigungselement kann auch als Nagel ausgestaltet sein. Das Sekundärbefestigungselement ist in die erste sekundäre und in die zweite sekundäre Durchgangsöffnung einbringbar, wenn das erste Spannelement an der Unterseite des Schraubenkopfs und das zweite Spannelement auf den Schraubenkopf aufgesteckt ist und die erste sekundäre Durchgangsöffnung und die zweite sekundäre Durchgangsöffnung zumindest annähernd deckungsgleich zueinander ausgerichtet sind. Durch Einbringen des Sekundärbefestigungselements in Einbringrichtung in die sekundären Durchgangsöffnungen, ist das zweite Spannelement am ersten Spannelement und/oder an der Oberseite des Schraubenkopfes befestigbar, indem die erste sekundäre Durchgangsöffnung und die zweite sekundäre Durchgangsöffnung vom Sekundärbefestigungselement durchgriffen und die beiden Spannelemente gemeinsam gegen das Anbauteil verspannt werden, wenn das Sekundärbefestigungselement in das Anbauteil eingeschraubt wird.

Kennzeichnend für die Erfindung ist, dass das erste Spannelement an der ersten primären Durchgangsöffnung eine erste, insbesondere stufenförmig ausgestaltete Ausnehmung und das zweite Spannelement an der zweiten primären Durchgangsöffnung eine zweite, insbesondere stufenförmig ausgestaltete Ausnehmung umfasst. Die stufenförmigen Ausnehmungen erstrecken sich jeweils beginnend von der Deckfläche in Richtung der Grundfläche der Spannelemente. Insbesondere sind die erste Ausnehmung bezüglich der ersten Spannelementachse und die zweite Ausnehmung bezüglich der zweiten Spannelementachse drehsymmetrisch. Unter "stufenförmig" ist insbesondere eine rechtwinklige Stufe zu verstehen. Jedoch kann die Ausnehmung des ersten Spannelements und des zweiten Spannelements auch als eine Schräge ausgestaltet sein. Die erste Ausnehmung und die zweite Ausnehmung sind durch einen kleineren und einen größeren radialen Durchmesser bezüglich der jeweiligen Spannelementachse gebildet. Ein kleinerer radialer Durchmesser der ersten Ausnehmung und ein kleinerer radialer Durchmesser der zweiten Ausnehmung sind insbesondere identisch mit dem Durchmesser der ersten primären Durchgangsöffnung und der zweiten primären Durchgangsöffnung. Zudem sind der kleinere Durchmesser der ersten Ausnehmung und der kleinere Durchmesser der zweiten Ausnehmung kleiner als ein größter radialer Durchmesser des Schraubenkopfes. Mit anderen Worten sind der erste und der zweite kleinere Durchmesser kleiner als der größte radiale Durchmesser des Schraubenkopfes und größer als ein Schaftdurchmesser der Primärschraube. Insbesondere sind der erste und der zweite kleinere Durchmesser jedoch größer als ein Gewindedurchmesser der Primärschraube.

In einem Montagezustand des Befestigungssystems umschließt die erste Ausnehmung eine Unterseite des Schraubenkopfes und die zweite Ausnehmung eine Oberseite des Schraubenkopfes zumindest teilweise formschlüssig. Unter "teilweise formschlüssig" ist zu verstehen, dass nicht die komplette Oberseite beziehungsweise Unterseite umschlossen sein muss. Der erste größere Durchmesser des ersten Spannelements und der zweite größere Durchmesser des zweiten Spannelements korrespondieren zudem derart mit dem radialen Durchmesser des Schraubenkopfes, dass der erste und der zweite größere Durchmesser größer als der größte radiale Durchmesser des Schraubenkopfs ist. Dadurch ist gewährleistet, dass in einem Montagezustand des Befestigungssystems, die erste Ausnehmung eine Unterseite des Schraubenkopfs und die zweite Ausnehmung eine Oberseite des Schraubenkopfs zumindest teilweise formschlüssig umschließt.

Unter "Montagezustand" ist ein Zustand zu verstehen, in dem die erste Spannelementachse des ersten Spannelements, die zweite Spannelementachse des zweiten Spannelements und die Primärschraube im Wesentlichen koaxial angeordnet sind und die erste Ausnehmung des ersten Spannelements an der Unterseite des Schraubenkopfs und die zweite Ausnehmung des zweiten Spannelements an der Oberseite des Schraubenkopfs anliegt. Zudem ist im Montagezustand das erste Spannelement zwischen einer Oberfläche des Anbauteils und der Unterseite des Schraubenkopfs der Primärschraube angeordnet. Dadurch überträgt die Primärschraube beim Befestigen des Anbauteils am Befestigungsgrund eine Spannkraft über die erste Ausnehmung des ersten Spannelements auf das Anbauteil. Das zweite Spannelement ist im Montagezustand bezüglich des ersten Spannelements um 180° verkippt auf dem Schraubenkopf aufgesteckt, derart, dass die Grundfläche des ersten Spannelements und die Grundfläche des zweiten Spannelements zueinander gerichtet sind beziehungsweise aneinander liegen. Zudem ist die erste sekundäre Durchgangsöffnung des ersten Spannelements mit der zweiten sekundären Durchgangsöffnung des zweiten Spannelements und somit die erste und die zweite Sekundärachse deckungsgleich gebracht. Die erste Spannelementachse, die zweite Spannelementachse und die Primärschraube sind im Wesentlichen koaxial zueinander ausgerichtet. Das Sekundärbefestigungselement ist in die zweite sekundäre und in die erste sekundäre Durchgangsöffnung in das Anbauteil eingebracht und verspannt das zweite Spannelement gegen das erste Spannelement und das erste und zweite Spannelement mit dem Anbauteil

In einer bevorzugten Ausgestaltung der Erfindung bilden im Montagezustand des Befestigungssystems die erste, insbesondere stufenförmige, Ausnehmung und die zweite, insbesondere stufenförmige, Ausnehmung eine nutartige Struktur, die den Schraubenkopf zumindest teilweise formschlüssig, insbesondere den Schraubenkopf umlaufend, umhüllt. Ist die erste Ausnehmung und die zweite Ausnehmung als Schräge ausgestaltet, nimmt die entsprechend gebildete nutartige Struktur eine trapezähnliche Gestalt an. Die nutartige, insbesondere kreisrunde, Struktur ist dadurch gebildet, dass die Grundfläche des ersten Spannelements und die Grundfläche des zweiten Spannelements zueinander gerichtet sind beziehungsweise aneinander liegen. Im Montagezustand können sich das erste Spannelement und das zweite Spannelement zumindest näherungsweise flächig und deckungsgleich berühren, was zu einer geschlossenen nutartigen Struktur führt, die durch die beiden Ausnehmungen gebildet wird. Weiter sind im Montagezustand die erste Sekundärachse und die zweite Sekundärachse weitestgehend deckungsgleich, wodurch die erste sekundäre und die zweite sekundäre Durchgangsöffnung einen gemeinsamen Schraubkanal ausbilden. Abhängig von der Ausgestaltung des Schraubenkopfs und von der Höhe der ersten und der zweiten Ausnehmung ist es möglich, dass das zweite Spannelement mit der zweiten Ausnehmung derart an der Oberseite des Schraubenkopfs und das erste Spannelement mit der ersten Ausnehmung derart an der Unterseite des Schraubenkopfs angeordnet ist, dass ein Abstand zwischen erstem und zweitem Spannelement existiert und der Schraubenkopf geklemmt ist. In diesem Fall stoßen die erste und die zweite Ausnehmung nicht gänzlich aneinander und die nutartige Struktur ist folglich nicht geschlossen. Eine Nichtklemmung des Schraubenkopfes in der nutartigen Struktur ist zu bevorzugen, da hierbei ein Ein- und Ausschraubvorgang der Primärschraube aus dem Befestigungsgrund nicht behindert wird.

In einer weiteren bevorzugten Ausgestaltung des Befestigungssystems korrespondiert eine Breite der nutartigen Struktur, die sich im Wesentlichen parallel zur ersten und zweiten Spannelementachse erstreckt, zumindest mit einer Teilhöhe des Schraubenkopfes. Unter einer "Teilhöhe" ist insbesondere die Höhe eines umlaufenden Bunds, insbesondere in der Form einer angeprägten Unterlegscheibe des Schraubenkopfs, zu verstehen. Vorteilhafterweise umschließt die nutartige Struktur nur den Bund des Schraubenkopfs formschlüssig und nicht den kompletten Schraubenkopf. Dadurch ist gewährleistet, dass im Montagezustand ein Drehwerkzeug an den Schraubenkopf angesetzt werden kann, ohne dass ein Ansetzen durch das zweite Spannelement behindert wird. Dies gilt insbesondere für die Verwendung einer Werkzeugnuss, eines Ring- oder eines Gabelschlüssels. Würde die nutartige Struktur den Schraubenkopf in seiner ganzen Höhe umschließen, wäre eine Werkzeugnuss, ein Ring- oder Gabelschlüssel nicht mehr an einem Außenmehrkant des Schraubenkopfs ansetzbar. In solch einem Fall muss der Schraubenkopf einen Innenmehrkant, beispielsweise einen Innensechskant zur Übertragung von Drehkräften aufweisen.

In einer weiteren vorteilhaften Ausgestaltung des Befestigungssystems weisen die erste sekundäre Durchgangsöffnung und die zweite sekundäre Durchgangsöffnung jeweils eine sich beginnend von der Deckfläche in Richtung der Grundfläche erstreckende Ansenkung zur Aufnahme eines Schraubenkopfs des Sekundärbefestigungselements auf. Die Ausgestaltung der Ansenkung korrespondiert hierbei mit der Ausgestaltung der Unterseite des Schraubenkopfs des Sekundärbefestigungselements. Bevorzugt ist der Schraubenkopf des Sekundärbefestigungselements als Senkkopf ausgestaltet, und folglich weist die Ansenkung eine trichterförmige, mit dem Senkkopf korrespondierende, Form auf. Zudem korrespondieren die Ansenkung und der Schraubenkopf derart miteinander, dass im Montagezustand des Befestigungssystems, eine Oberseite des Schraubenkopfs des Sekundärbefestigungselements zumindest nahezu bündig mit einer Oberfläche des zweiten Spannelements, die dem Anbauteil abgewandt ist, abschließt. Dadurch ist sichergestellt, dass ein Drehvorgang der Primärschraube, beispielsweise mit einem Gabelschlüssel, nicht durch den Schraubenkopf der Sekundärschraube behindert wird. Zudem ist hierdurch ein Verletzungsrisiko für den Anwender des Befestigungssystems minimiert.

In einem erfindungsgemäßen Verfahren zur Montage und Justage eines Anbauteils an einem Befestigungsgrund mit dem erfindungsgemäßen Befestigungssystem, wird in einem ersten Montageschritt die Primärschraube in die erste primäre Durchgangsöffnung des ersten Spannelements derart eingebracht, dass die Unterseite des Schraubenkopfs, insbesondere die Unterseite des Bunds des Schraubenkopfes, mit der ersten, insbesondere stufenförmigen, Ausnehmung des ersten Spannelements in Wirkverbindung tritt. Weiter wird die Primärschraube in eine in dem Anbauteil vorgefertigte beziehungsweise zuvor zu erstellende Durchgangsbohrung eingebracht und in ein korrespondierendes Bohrloch, insbesondere ein Sackloch, im Befestigungsgrund eingebracht, beziehungsweise eingeschraubt. Hierdurch gelangt eine Unterseite des ersten Spannelements vorzugsweise vollflächig mit einer Oberfläche des Anbauteils in Kontakt. Durch den Schraubenkopf wird eine Spannkraft über die erste Ausnehmung des ersten Spannelements auf das Anbauteil und den Untergrund übertragen, wodurch das Anbauteil gegenüber dem Untergrund verspannt ist. Das erste Spannelement kann hierbei bezüglich der Oberfläche des Anbauteils auch versenkt montiert werden, was dazu führt, dass der Schraubenkopf der Primärschraube nicht über die Oberfläche des Anbauteils herausragt. Sowohl aus optischen Gründen, als auch aus Gründen des Verletzungsrisikos für einen Anwender des Befestigungssystems, ist eine versenkte Montage zu bevorzugen.

In einem weiteren Schritt des erfindungsgemäßen Verfahrens wird das zweite Spannelement derart in Einbringrichtung der Primärschraube auf den Schraubenkopf, insbesondere auf die Oberseite des Bunds des Schraubenkopfs aufgesteckt, dass die erste sekundäre Durchgangsöffnung des ersten Spannelements mit der zweiten sekundären Durchgangsöffnung des zweiten Spannelements korrespondiert, also weitgehend deckungsgleich zu dieser ausgerichtet ist. Zudem sind die Grundfläche des ersten Spannelements und die Grundfläche des zweiten Spannelements zueinander gerichtet beziehungsweise flächig aneinander liegend am Schraubenkopf angeordnet, wodurch die erste, insbesondere stufenförmige, Ausnehmung und die zweite, insbesondere stufenförmige Ausnehmung, eine nutartige Struktur bilden, die die Oberseite des Schraubenkopfs und die Unterseite des Schraubenkopfs zumindest teilweise formschlüssig und vorzugsweise umlaufend umhüllt.

In einem weiteren Schritt wird das Sekundärbefestigungselement, insbesondere eine Senkkopfschraube, durch die erste sekundäre Durchgangsöffnung und die zweite sekundäre Durchgangsöffnung hindurch in das Anbauteil eingebracht, insbesondere eingeschraubt, bis ein Kopf des Sekundärbefestigungselements, insbesondere ein Senkkopf der Senkkopfschraube, mit einer Oberfläche des zweiten Spannelements in Kontakt tritt und das zweite Spannelement gegenüber dem ersten Spannelement verspannt. Insbesondere weisen das erste und das zweite Spannelement mehrere erste beziehungsweise zweite sekundäre Durchgangsöffnungen auf, in welche jeweils ein Sekundärbefestigungselement eingebracht wird. Dies begünstigt eine gleichmäßige Anlage des zweiten Spannelements auf dem ersten Spannelement und verhindert, dass sich beim Herausdrehen des primären Spannelements aus dem Untergrund, das zweite Spannelement bezüglich dem ersten Spannelement durch eine Spaltbildung verkantet oder sich das zweite Spannelement gänzlich vom ersten Spannelement löst. Zudem ist bei einer Montage und Justage eines schweren Anbauteils an einem Befestigungsgrund eine Mehrzahl von Sekundärbefestigungselementen vorteilhaft, um die Gewichtskraft sicher übertragen zu können. Nachdem das Sekundärbefestigungselement montiert ist, ist der Montagezustand des Befestigungssystems hergestellt. Das Befestigungssystem kann auf einer Oberfläche des Anbauteils, jedoch auch im Anbauteil versenkt montiert werden. Eine versenkte Montage ist insbesondere aus Gründen des Verletzungsrisikos sowie optischer Aspekte zu bevorzugen.

Nachdem das erfindungsgemäße Befestigungssystem verwendungsgerecht am Anbauteil und am Befestigungsgrund befestigt ist, sprich der Montagezustand hergestellt ist, kann das Anbauteil bezüglich des Befestigungsgrunds nivelliert werden. Hierzu kann die Primärschraube entgegen ihrer Einbringrichtung aus dem Untergrund herausbewegt werden. Ist eine Unterseite des zweiten Spannelements bereits in Anlage mit der Oberseite des Schraubenkopfs der Primärschraube, wird das zweite Spannelement und dadurch das Anbauteil mitbewegt, so dass eine Beabstandung des Anbauteils vom Befestigungsgrund unverzüglich beim Herausbewegen der Primärschraube beginnt. Abhängig von der Ausgestaltung des Schraubenkopfes und einer Breite der nutartigen Struktur ist es auch möglich, dass erst durch das Herausbewegen der Primärschraube aus dem Befestigungsgrund, die Unterseite des zweiten Spannelements mit der Oberseite des Schraubenkopfes in Kontakt tritt. Erst bei Kontakt erfolgt eine Rückbewegung des Anbauteils vom Befestigungsgrund.

Nachdem durch Herausdrehen der Primärschraube das Anbauteil gegenüber dem Befestigungsgrund ausreichend nivelliert ist, kann das Anbauteil im nivellierten Zustand fixiert werden. Hierzu wird meist ein druckstabiles Material, wie beispielsweise eine Mörtelmasse oder ein PU-Schaum, zwischen dem Anbauteil und dem Befestigungsgrund eingebracht.

Anschließend wird vorzugsweise das sekundäre Befestigungselement aus dem Anbauteil sowie aus der ersten sekundären und der zweiten sekundären Durchgangsöffnung entfernt. Anschließend kann das zweite Spannelement vom ersten Spannelement, vom Schraubenkopf und vom Anbauteil entfernt werden, wodurch dieses wiederverwendet werden kann. Das zweite Spannelement kann in einem weiteren erfindungsgemäßen Befestigungssystem, bedingt durch die identische Ausgestaltung, auch als erstes Spannelement fungieren.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand eines Ausführungsbeispiels erklärt.

Es zeigen:

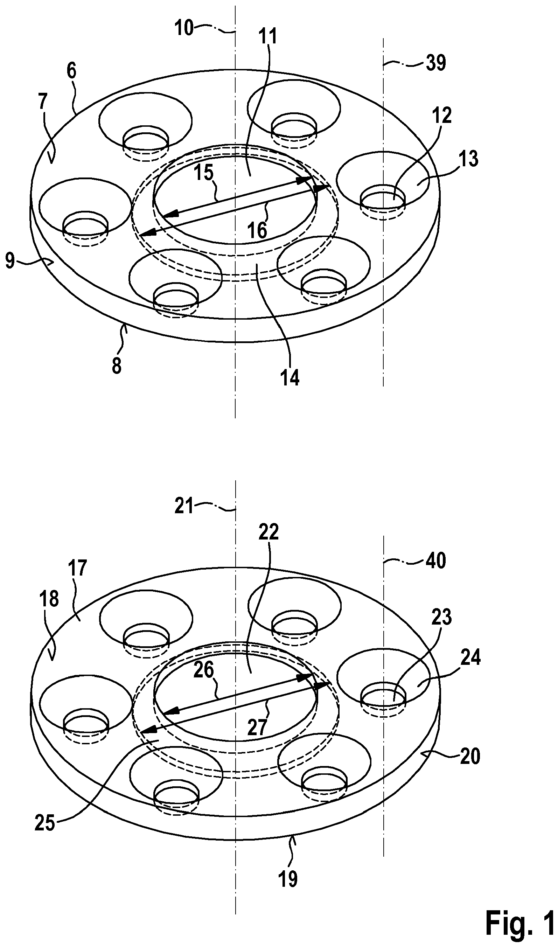

- Figur 1: ein erstes Spannelement und ein zweites Spannelement eines erfindungsgemäßen Befestigungssystems in einer perspektivischen Darstellung,
- Figur 2: das erste Spannelement und das zweite Spannelement desselben erfindungsgemäßen Befestigungssystems angeordnet an einem Bund eines Schraubenkopfes einer Primärschraube in einer perspektivischen Darstellung, und
- Figur 3: dasselbe erfindungsgemäße Befestigungssystem in einem Montagezustand mit einem Anbauteil an einem Befestigungsgrund in einer perspektivischen Schnittdarstellung.

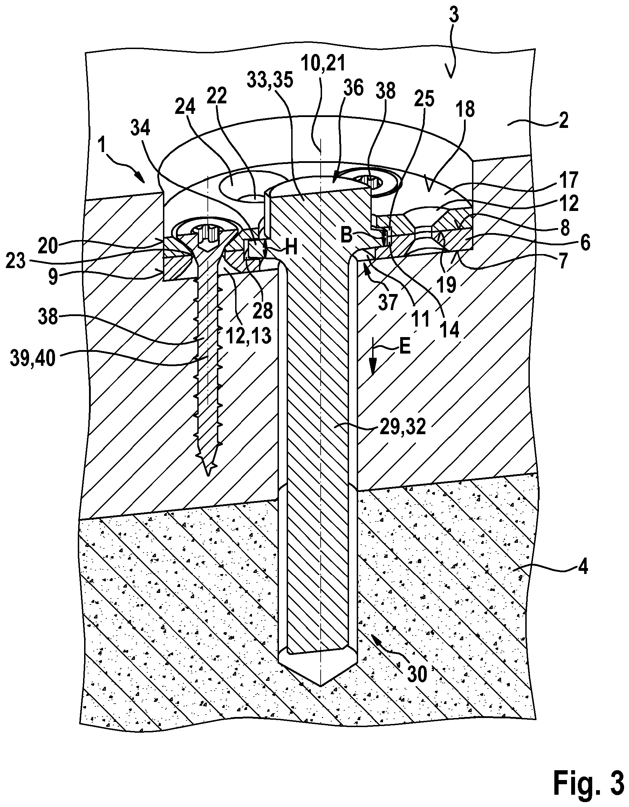

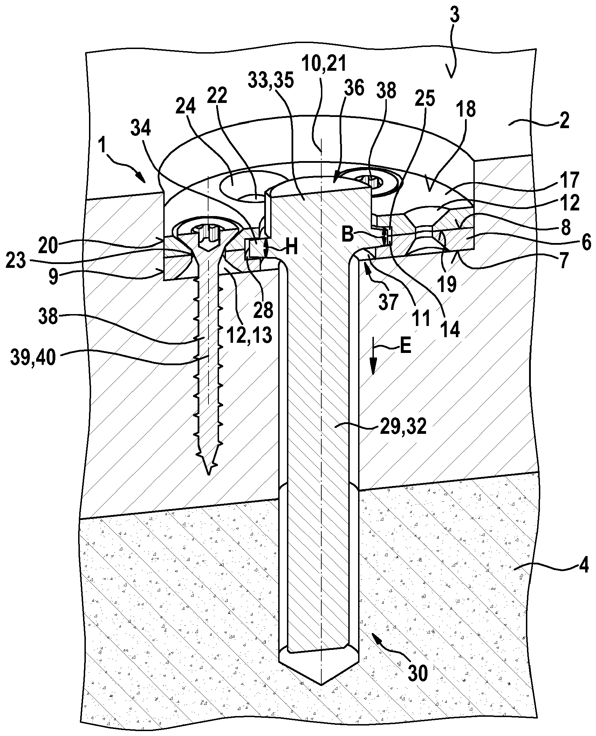

Das erfindungsgemäße Befestigungssystem 1 umfasst ein erstes Spannelement 6 und ein zum ersten Spannelement 6 geometrisch identisch ausgestaltetes zweites Spannelement 17. Das erste Spannelement 6 ist als eine kreisrunde Scheibe ausgestaltet und drehsymmetrisch bezüglich einer ersten Spannelementachse 10. Das erste Spannelement 6 weist eine plane, kreisrunde Deckfläche 7, eine zur Deckfläche 7 parallel orientierte und ebenfalls plane, kreisrunde Grundfläche 8, sowie eine die Deckfläche 7 und die Grundfläche 8 umlaufend verbindende Seitenfläche 9 auf. Bezüglich der ersten Spannelementachse 10 symmetrisch und sich parallel zu der Spannelementachse 10 erstreckend ist das erste Spannelement 6 von einer kreisrunden ersten primären Durchgangsöffnung 11 durchbrochen. Radial bezüglich der ersten Spannelementachse 10 versetzt sind sechs erste sekundäre Durchgangsöffnungen 12 angeordnet. Die ersten sekundären Durchgangsöffnungen 12 erstrecken sich in Richtung einer ersten Sekundärachse 39, welche parallel zur ersten Spannelementachse 10 orientiert ist. Bezüglich der ersten Spannelementachse 10 weisen die ersten sekundären Durchgangsöffnungen 12 eine sechszählige Drehsymmetrie auf. Zudem sind die ersten sekundären Durchgangsöffnungen 12 bezüglich der Seitenfläche 9 des ersten Spannelements 6 und der ersten primären Durchgangsbohrung 11 symmetrisch angeordnet. Von der Deckfläche 7 des ersten Spannelements 6 erstrecken sich in Richtung der Grundfläche 8 an jeder ersten sekundären Durchgangsöffnung 12 kegelförmige Ansenkungen 13, die mit einem Senkkopf eines Sekundärbefestigungselements 38 korrespondieren, dargestellt in Figur 3. Durch die Ansenkung 13 kann der Senkkopf des Sekundärbefestigungselements 38 zumindest nahezu bündig mit der Deckfläche 7 abschließen. An der ersten primären Durchgangsöffnung 11 ist weiter eine erste stufenförmige Ausnehmung 14 angeordnet. Diese ist drehsymmetrisch bezüglich der ersten Spannelementachse 10 orientiert und durch einen Abschnitt mit einem kleineren radialen Durchmesser 15 und einen Abschnitt mit einem größeren radialen Durchmesser 16 gebildet. Der Abschnitt mit dem kleineren radialen Durchmesser 15 legt den minimalen Querschnitt der ersten primären Durchgangsöffnung 11 fest und erstreckt sich beginnend von der Deckfläche 7 in Richtung der Grundfläche 8 bis zu einer Mitte der Seitenfläche 9. Beginnend von der Mitte der Seitenfläche 9 bis zur Grundfläche 8 erstreckt sich der Abschnitt mit dem größeren radialen Durchmesser 16. Dieser erstreckt sich zudem derart weit in Richtung der Seitenfläche 9, bis dieser bezüglich der ersten Spannelementachse 10 einen gleichen Abstand wie der Beginn einer Ansenkung 13 bezüglich der ersten Spannelementachse 10 aufweist.

Das zweite Spannelement 17 ist bezüglich dem ersten Spannelement 6 geometrisch identisch aufgebaut und weist eine Deckfläche 18, eine Grundfläche 19, eine Seitenfläche 20, eine zweite Spannelementachse 21, eine zweite primäre Durchgangsöffnung 22, eine zweite sekundäre Durchgangsöffnung 23, eine Ansenkung 24, sowie eine zweite stufenförmige Ausnehmung 25 auf. Die zweite stufenförmige Ausnehmung 25 ist durch einen Abschnitt mit einem kleineren radialen Durchmesser 26 und einen Abschnitt mit einem größeren radialen Durchmesser 27 gebildet.

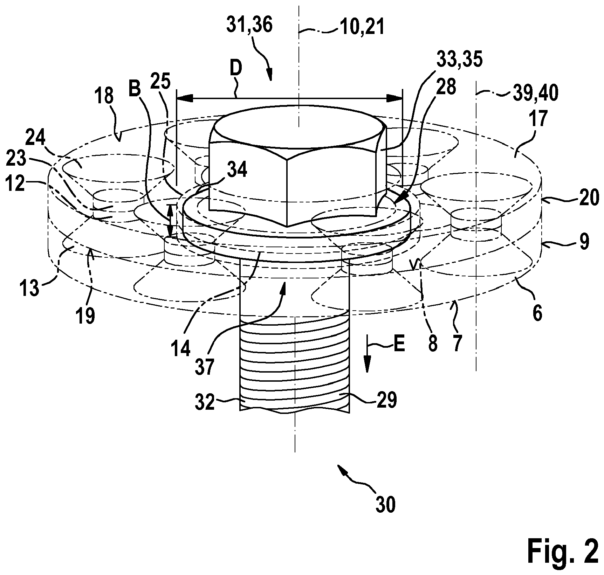

In Figur 2 ist das erste Spannelement 6 und das zweite Spannelement 17 an einem Bund 34 eines Schraubenkopfes 33 einer ein Gewinde 32 aufweisenden Primärschraube 29 angeordnet. Der Bund 34 ist als eine, an eine als Sechskant ausgebildete Werkzeugaufnahme 35, angeprägte Unterlegscheibe ausgeformt, wobei die Werkzeugaufnahme 35 an einem Werkzeugende 31 der Primärschraube 29 angeordnet ist. In diesem Zustand sind die erste Spannelementachse 10 des ersten Spannelements 6 und die zweite Spannelementachse 21 des zweiten Spannelements 17 deckungsgleich. Das zweite Spannelement 17 ist mit der Grundfläche 19 voraus in einer Einbringrichtung E auf den Schraubenkopf 33 aufgesteckt, so dass das zweite Spannelement 17 mit der zweiten stufenförmigen Ausnehmung 25 auf auf der Oberseite des Bunds 34 des Schraubenkopfs 33 zur Anlage kommt. Der kleinere Durchmesser 26 ist mit dem Schraubenkopf 33 derart abgestimmt, dass das zweite Spannelement 17 um die zweite Spannelementachse 21 klemmfrei gedreht werden kann. Zudem ist der größere Durchmesser 27 derart mit einem radialen Durchmesser D des Bunds 34 abgestimmt, dass das zweite Spannelement 17 zudem klemmfrei um den Bund 34 bezüglich der zweiten Spannelementachse 21 gedreht werden kann.

Das erste Spannelement 6 ist auf das Gewinde 32 der Primärschraube 29 entgegen der Einbringrichtung E mit der Grundfläche 8 voraus aufgesteckt, und zwar derart weit, bis die Grundfläche 8 des ersten Spannelements 6 mit der Grundfläche 19 des zweiten Spannelements 17 flächig in Kontakt tritt oder bis die erste stufenförmige Ausnehmung 14 mit dem Bund 34 des Schraubenkopfs 33 an der Unterseite 37 des Schraubenkopfs in Anlage tritt. Der kleinere radiale Durchmesser 15 der ersten Ausnehmung 14 und der kleinere radiale Durchmesser 26 der zweiten Ausnehmung 24 sind gleich groß. Zudem sind der größere radiale Durchmesser 16 der ersten Ausnehmung 14 und der größere radiale Durchmesser 27 der zweiten Ausnehmung 24 gleich groß. Dadurch bilden das erste Spannelement 6 und das zweite Spannelement 17 in dem in Figur 2 dargestellten Zustand, in dem die Grundflächen 8 und 19 aneinander anliegen, eine symmetrische, nutartige Struktur 28, die den Bund 34 des Schraubenkopfs 33 formschlüssig umlaufend umschließt. Eine Breite B der nutartigen Struktur 28, die sich parallel zur ersten Spannelementachse 10 erstreckt ist zumindest geringfügig größer als eine Teilhöhe H des Schraubenkopfs 33, die der Höhe des Bunds 34 entspricht. Dadurch ist es möglich, dass wenn das erste Spannelement 6 mit der Grundfläche 8 in Anlage mit der Grundfläche 19 des zweiten Spannelements 17 ist, die beiden Spannelemente 6 und 17 zusammen klemmfrei um den Bund 34 des Schraubenkopfs 33 um die erste und zweite Spannelementachsen 10, 21 gedreht werden können und eine Drehbarkeit nicht durch den Bund 34 behindert wird. Zudem sind in dem in Figur 2 dargestellten Zustand, die erste Spannelementachse 10 des ersten Spannelements 6, die zweite Spannelementachse 21 des zweiten Spannelements 17, die erste Sekundärachse 39 des ersten Spannelements 6 und eine zweite Sekundärachse 40 des zweiten Spannelements 17 jeweils deckungsgleich orientiert, wodurch die ersten sechs sekundären Durchgangsöffnungen 12 und die zweiten sechs sekundären Durchgangsöffnungen 23 jeweils einen gemeinsamen Schraubenkanal für die Sekundärbefestigungselemente 38 bilden.

In Figur 3 ist ein Schnitt des erfindungsgemäßen Befestigungssystems 1 in einem Montagezustand dargestellt. Mit Hilfe des erfindungsgemäßen Befestigungssystems 1 ist ein Anbauteil 2 an einem Befestigungsgrund 4 befestigt. Bei dem Anbauteil 2 handelt es sich zumeist um einen Holzbalken und bei dem Befestigungsgrund 4 um eine Betonplatte. Bei der Primärschraube 29, die durch das Anbauteil 2 mit einem Einbringende 30 voraus in den Befestigungsgrund 4 eingeschraubt ist, handelt es sich insbesondere um eine handelsübliche Betonschraube. Das Befestigungssystem 1 ist bezüglich der Oberfläche 3 des Anbauteils 2 im Anbauteil 2 versenkt montiert, wodurch das Befestigungssystem 1 nicht über die Oberfläche 5 des Befestigungsgrunds 4 übersteht, so dass ein Verletzungsrisiko minimiert ist. Die Deckfläche 7 des ersten Spannelements 6 ist vollflächig mit dem Anbauteil 2 in Anlage. Weiter ist die Grundfläche 8 des ersten Spannelements 6 mit der Grundfläche 19 des zweiten Spannelements 17 vollflächig in Anlage. In diesem Zustand bilden das erste Spannelement 6 und das zweite Spannelement 17 die nutartige Struktur 28, die den Bund 34 des Schraubenkopfs 33 umlaufend formschlüssig umgibt. Die Primärschraube 29 ist durch das Anbauteil 2 in den Befestigungsgrund 4 eingeschraubt und überträgt eine Spannkraft auf die erste stufenförmige Ausnehmung 14 des ersten Spannelements 6, wodurch das Anbauteil 2 gegen den Befestigungsgrund 4 gedrückt wird. Zwei Senkkopfschrauben sind als erste Sekundärbefestigungselemente 38 jeweils durch die erste sekundäre Durchgangsöffnung 12 des ersten Spannelements 6 und durch die zweite sekundäre Durchgangsöffnung 23 des zweiten Spannelements 17 hindurch in das Anbauteil 2 geschraubt. Hierdurch wird das zweite Spannelement 17 gegen das erste Spannelement 6 und das Anbauteil 2 gehalten. Wird nun die Primärschraube 29 entgegen der Einbringrichtung E aus dem Befestigungsgrund 4 herausgedreht (nicht dargestellt), drückt der Bund 34 des Schraubenkopfs 33 gegen die zweite stufenförmige Ausnehmung 25 des zweiten Spannelements 17. Da das zweite Spannelement 17 über die Sekundärbefestigungselemente 38 im Anbauteil 2 gehalten ist, wird beim Herausdrehen der Primärschraube 29 das Anbauteil 2 mit dem zweiten Spannelement 17 bewegt. Bei weiterem Herausdrehen der Primärschraube 29 aus dem Befestigungsgrund 4 wird das Anbauteil 2 bezüglich des Untergrunds 4 beabstandet und kann dadurch nivelliert werden. Ist eine gewünschte Position des Anbauteils 2 bezüglich des Befestigungsgrunds 4 erreicht, kann ein Zwischenraum zwischen Anbauteil 2 und Untergrund 4 (nicht dargestellt) mit einem druckstabilen Material, wie beispielsweise einem Mörtel (nicht dargestellt), ausgefüllt werden. Abschließend können die Sekundärbefestigungselemente 38 aus dem Anbauteil herausgedreht und das zweite Spannelement 17 entfernt und wiederverwendet werden.

### Bezugszeichenliste

### Befestigungssystem

- 1: Befestigungssystem
- 2: Anbauteil
- 3: Oberfläche des Anbauteils 2
- 4: Befestigungsgrund
- 5: Oberfläche des Befestigungsgrunds 4
- 6: erstes Spannelement
- 7: Deckfläche des ersten Spannelements 6
- 8: Grundfläche des ersten Spannelements 6
- 9: Seitenfläche des ersten Spannelements 6
- 10: erste Spannelementachse des ersten Spannelements 6
- 11: erste primäre Durchgangsöffnung des ersten Spannelements 6
- 12: erste sekundäre Durchgangsöffnung des ersten Spannelements 6
- 13: Ansenkung des ersten Spannelements 6
- 14: erste stufenförmige Ausnehmung des ersten Spannelements 6
- 15: kleinerer radialer Durchmesser der ersten Ausnehmung 14
- 16: größerer radialer Durchmesser der ersten Ausnehmung 14
- 17: zweites Spannelement
- 18: Deckfläche des zweiten Spannelements 17
- 19: Grundfläche des zweiten Spannelements 17
- 20: Seitenfläche des zweiten Spannelements 17
- 21: zweite Spannelementachse des zweiten Spannelements 17
- 22: zweite primäre Durchgangsöffnung des zweiten Spannelements 17
- 23: zweite sekundäre Durchgangsöffnung des zweiten Spannelements 17
- 24: Ansenkung des zweiten Spannelements 17
- 25: zweite stufenförmige Ausnehmung des zweiten Spannelements 17
- 26: kleinerer radialer Durchmesser der zweiten Ausnehmung 25
- 27: größerer radialer Durchmesser der zweiten Ausnehmung 25
- 28: nutartige Struktur
- 29: Primärschraube
- 30: Einbringende der Primärschraube 29
- 31: Werkzeugende der Primärschraube 29
- 32: Gewinde
- 33: Schraubenkopf der Primärschraube 29
- 34: Bund des Schraubenkopfs 33
- 35: Werkzeugaufnahme
- 36: Oberseite des Schraubenkopfs 33
- 37: Unterseite des Schraubenkopfs 33
- 38: Sekundärbefestigungselement
- 39: erste Sekundärachse des ersten Spannelements 6
- 40: zweite Sekundärachse des zweiten Spannelements 17
- B: Breite der nutartigen Struktur 28
- D: radialer Durchmesser des Bunds 34 des Schraubenkopfs 33
- E: Einbringrichtung
- H: Teilhöhe des Schraubenkopfs 33

## Patentansprüche

1. Befestigungssystem (1) zur Montage und Justage eines Anbauteils (2) an einem Befestigungsgrund (4), umfassend:
- ein erstes, insbesondere scheibenartiges, Spannelement (6) mit einer ersten primären Durchgangsöffnung (11) sowie mindestens einer ersten sekundären Durchgangsöffnung (12),
- ein zweites, insbesondere scheibenartiges, Spannelement (17) mit einer zweiten primären Durchgangsöffnung (22) sowie mindestens einer zweiten sekundären Durchgangsöffnung (23),
- eine Primärschraube (29), mit welcher das Anbauteil (2) am Befestigungsgrund (4) fixierbar und das erste Spannelement (6) mit dem Anbauteil (2) verspannbar ist, mit einem Schraubenkopf (33) und einer am Schraubenkopf (33) angeordneten Werkzeugaufnahme (35), sowie
- ein Sekundärbefestigungselement (38), welches in die erste sekundäre und in die zweite sekundäre Durchgangsöffnung (12, 23) einbringbar ist,
wobei das zweite Spannelement (17) an der zweiten primären Durchgangsöffnung (22) eine zweite, insbesondere stufenförmige, Ausnehmung (25) umfasst, wobei ein größerer radialer Durchmesser (27) der zweiten Ausnehmung (25) größer als ein größter radialer Durchmesser (D) des Schraubenkopfs (33) und ein kleinerer radialer Durchmesser (26) der zweiten Ausnehmung (25) kleiner als der größte radiale Durchmesser (D) des Schraubenkopfs (33) ist,
**dadurch gekennzeichnet, dass** das erste Spannelement (6) an der ersten primären Durchgangsöffnung (11) eine erste, insbesondere stufenförmige, Ausnehmung (14) umfasst, wobei ein größerer radialer Durchmesser (16) der ersten Ausnehmung (14) größer als ein größter radialer Durchmesser (D) des Schraubenkopfs (33) und ein kleinerer radialer Durchmesser (15) der ersten Ausnehmung (14) kleiner als der größte radiale Durchmesser (D) des Schraubenkopfs (33) ist, derart dass in einem Montagezustand des Befestigungssystems (1) die erste Ausnehmung (14) eine Unterseite (37) des Schraubenkopfs (33) und die zweite Ausnehmung (25) eine Oberseite (36) des Schraubenkopfs (33) zumindest teilweise formschlüssig umschließt.

2. Befestigungssystem (1) nach Anspruch 1, **dadurch gekennzeichnet, dass** im Montagezustand des Befestigungssystems (1) die erste, insbesondere stufenförmige, Ausnehmung (14) und die zweite, insbesondere stufenförmige, Ausnehmung (25) gemeinsam eine nutartige Struktur (28) bilden, die den Schraubenkopf (33), zumindest teilweise, formschlüssig umschließt.

3. Befestigungssystem (1) nach Anspruch 1 oder 2, **dadurch gekennzeichnet, dass** im Montagezustand das erste Spannelement (6) und das zweite Spannelement (17) zumindest annähernd flächig und deckungsgleich aufeinander liegen.

4. Befestigungssystem nach Anspruch 2 oder 3, **dadurch gekennzeichnet, dass** eine Breite (B) der nutartigen Struktur (28) zumindest mit einer Teilhöhe (H) des Schraubenkopfs (33) korrespondiert.

5. Befestigungssystem (1) nach einem der vorigen Ansprüche, **dadurch gekennzeichnet, dass** die erste sekundäre Durchgangsöffnung (12) und die zweite sekundäre Durchgangsöffnung (23) jeweils einseitig eine Ansenkung (13, 24) zur Aufnahme eines Schraubenkopfs des Sekundärbefestigungselements (38) aufweisen.

6. Befestigungssystem (1) nach einem der vorigen Ansprüche, **dadurch gekennzeichnet, dass** das erste Spannelement (6) und das zweite Spannelement (17) geometrisch identisch ausgebildet sind.

7. Verfahren zur Montage und Justage eines Anbauteils (2) an einem Befestigungsgrund (4) mit einem Befestigungssystem (1) nach einem der vorigen Ansprüche, **dadurch gekennzeichnet, dass** in einem ersten Montageschritt die Primärschraube (29) in die erste primäre Durchgangsöffnung (11) des ersten Spannelements (6) derart eingebracht wird, dass die Unterseite (37) des Schraubenkopfs (33) mit der ersten Ausnehmung (14) des ersten Spannelements (6) in Wirkverbindung tritt, und dass die Primärschraube (29) in einer Einbringrichtung (E) in das Anbauteil (2) und in den Befestigungsgrund (4) eingebracht wird.

8. Verfahren nach Anspruch 7, **dadurch gekennzeichnet, dass** die Primärschraube (29) in eine vorgefertigte Durchgangsbohrung im Anbauteil und in eine mit der Durchgangsbohrung korrespondierende Bohrung im Befestigungsgrund (4) eingeschraubt wird, und die Unterseite (37) des Schraubenkopfs (33) eine Spannkraft auf das erste, in Anlage mit einer Oberfläche (3) des Anbauteils (2) stehende, Spannelement (6) ausübt.

9. Verfahren nach Anspruch 7 oder 8, **dadurch gekennzeichnet, dass** in einem weiteren Schritt das zweite Spannelement (17) derart auf den Schraubenkopf (33) in Einbringrichtung (E) der Primärschraube (29) aufgesteckt wird, dass die erste sekundäre Durchgangsöffnung (12) des ersten Spannelements (6) mit der zweiten sekundären Durchgangsöffnung (23) des zweiten Spannelements (17) korrespondiert, und die erste Ausnehmung (14) des ersten Spannelements (6) und die zweite Ausnehmung (25) des zweiten Spannelements (17) eine nutartige Struktur (28) bilden, die den Schraubenkopf (33) zumindest teilweise formschlüssig umhüllt.

10. Verfahren nach Anspruch 9, **dadurch gekennzeichnet, dass** die Position des ersten Spannelements (6), des zweiten Spannelements (17), der Primärschraube (29) und des Anbauteils (2) zueinander durch Einbringen des Sekundärbefestigungselements (38) in die erste sekundäre Durchgangsöffnung (12) und die korrespondierende zweite sekundäre Durchgangsöffnung (23) in das Anbauteil (2) hinein fixiert und das zweite Spannelement (17) gegenüber dem ersten Spannelement (6) gehalten wird.

11. Verfahren zur Montage und Justage nach einem der Ansprüche 7 bis 10, **dadurch gekennzeichnet, dass** in einem weiteren Verfahrensschritt durch Herausdrehen der Primärschraube (29) aus dem Befestigungsgrund (4) das Anbauteil (2) bezüglich des Befestigungsgrunds (4) beabstandet und damit nivelliert wird, wobei die Oberseite (36) des Schraubenkopfs (33) mit der zweiten Ausnehmung (25) des zweiten Spannelements (17) in Anlage ist.

12. Verfahren zur Montage und Justage nach Anspruch 11, **dadurch gekennzeichnet, dass** in einem weiteren Verfahrensschritt ein Abstand zwischen dem Befestigungsgrund (4) und dem Anbauteil (2) mit einem zusätzlichen druckstabilen Material befüllt wird, wodurch eine nivellierte Position des Anbauteils (2) zum Befestigungsgrund (4) fixiert wird.

13. Verfahren zur Montage und Justage nach Anspruch 12, **dadurch gekennzeichnet, dass** durch Entfernen des Sekundärbefestigungselements (38) aus dem Anbauteil (2), das zweite Spannelement (17) vom Anbauteil (2), vom ersten Spannelement (6) und von der Primärschraube (29) entfernt wird.

## Claims

1. Fixing system (1) for mounting and adjustment of an add-on part (2) on a fixing substrate (4), comprising:
- a first clamping element (6), especially a disc-like clamping element, having a first primary through-opening (11) and at least one first secondary through-opening (12),
- a second clamping element (17), especially a disc-like clamping element, having a second primary through-opening (22) and at least one second secondary through-opening (23),
- a primary screw (29), with which the add-on part (2) is securable on the fixing substrate (4) and the first clamping element (6) is clampable to the add-on part (2), having a screw head (33) and a tool receiver (35) arranged on the screw head (33), and
- a secondary fixing element (38) which is introducible into the first secondary through-opening (12) and into the second secondary through-opening (23),
wherein the second clamping element (17) comprises a second recess (25), especially a step-shaped recess, on the second primary through-opening (22), a larger radial diameter (27) of the second recess (25) being larger than a largest radial diameter (D) of the screw head (33) and a smaller radial diameter (26) of the second recess (25) being smaller than the largest radial diameter (D) of the screw head (33),
**characterised in that** the first clamping element (6) comprises a first recess (14), especially a step-shaped recess, on the first primary through-opening (11), a larger radial diameter (16) of the first recess (14) being larger than a largest radial diameter (D) of the screw head (33) and a smaller radial diameter (15) of the first recess (14) being smaller than the largest radial diameter (D) of the screw head (33) in such a way that, when the fixing system (1) is in a mounted state, the first recess (14) at least partly interlockingly encompasses an underside (37) of the screw head (33) and the second recess (25) at least partly interlockingly encompasses an upper side (36) of the screw head (33).

2. Fixing system (1) according to claim 1, **characterised in that**, when the fixing system (1) is in the mounted state, the first, especially step-shaped, recess (14) and the second, especially step-shaped, recess (25) together form a groove-like structure (28) which, at least partly, interlockingly encompasses the screw head (33).

3. Fixing system (1) according to claim 1 or 2, **characterised in that**, in the mounted state, the first clamping element (6) and the second clamping element (17) lie one on top of the other at least approximately in face-to-face contact and in register with one another.

4. Fixing system according to claim 2 or 3, **characterised in that** a width (B) of the groove-like structure (28) corresponds to at least a partial height (H) of the screw head (33).

5. Fixing system (1) according to any one of the preceding claims, **characterised in that** the first secondary through-opening (12) and the second secondary through-opening (23) each have a countersink (13, 24) on one side for receiving a screw head of the secondary fixing element (38).

6. Fixing system (1) according to any one of the preceding claims, **characterised in that** the first clamping element (6) and the second clamping element (17) are of identical geometric configuration.

7. Method for mounting and adjustment of an add-on part (2) on a fixing substrate (4) using a fixing system (1) according to any one of the preceding claims, **characterised in that**, in a first mounting step, the primary screw (29) is introduced into the first primary through-opening (11) of the first clamping element (6) in such a way that the underside (37) of the screw head (33) enters into operative connection with the first recess (14) of the first clamping element (6); and the primary screw (29) is introduced into the add-on part (2) and into the fixing substrate (4) in an introduction direction (E).

8. Method according to claim 7, **characterised in that** the primary screw (29) is screwed into a premade through-bore in the add-on part and into a bore in the fixing substrate (4) corresponding to the through-bore, and the underside (37) of the screw head (33) exerts a clamping force on the first clamping element (6) which is in contact with a surface (3) of the add-on part (2).

9. Method according to claim 7 or 8, **characterised in that,** in a further step, the second clamping element (17) is mounted on the screw head (33) in the introduction direction (E) of the primary screw (29) in such a way that the first secondary through-opening (12) of the first clamping element (6) corresponds to the second secondary through-opening (23) of the second clamping element (17), and the first recess (14) of the first clamping element (6) and the second recess (25) of the second clamping element (17) form a groove-like structure (28) which at least partly interlockingly surrounds the screw head (33).

10. Method according to claim 9, **characterised in that** the position of the first clamping element (6), of the second clamping element (17), of the primary screw (29) and of the add-on part (2) relative to one another is secured by introduction of the secondary fixing element (38) into the first secondary through-opening (12) and into the corresponding second secondary through-opening (23) and into the add-on part (2), and the second clamping element (17) is held with respect to the first clamping element (6).

11. Method for mounting and adjustment according to any one of claims 7 to 10, **characterised in that,** in a further method step, the add-on part (2) is spaced apart from the fixing substrate (4) and accordingly levelled relative thereto by screwing the primary screw (29) out of the fixing substrate (4), the upper side (36) of the screw head (33) being in contact with the second recess (25) of the second clamping element (17).

12. Method for mounting and adjustment according to claim 11, **characterised in that,** in a further method step, a gap between the fixing substrate (4) and the add-on part (2) is filled with an additional pressure-resistant material, so that a levelled position of the add-on part (2) relative to the fixing substrate (4) is secured.

13. Method for mounting and adjustment according to claim 12, **characterised in that** the second clamping element (17) is removed from the add-on part (2), from the first clamping element (6) and from the primary screw (29) by removal of the secondary fixing element (38) from the add-on part (2).

## Revendications

1. Système de fixation (1) dévolu au montage et à l'ajustement d'une pièce (2) rapportée sur une base de fixation (4), incluant :
- un premier élément de serrage (6), notamment de type discoïdal, muni d'un premier orifice primaire de passage (11), ainsi que d'au moins un premier orifice secondaire de passage (12),
- un second élément de serrage (17), notamment de type discoïdal, pourvu d'un second orifice primaire de passage (22), ainsi que d'au moins un second orifice secondaire de passage (23),
- une vis primaire (29), à l'aide de laquelle la pièce rapportée (2) peut être verrouillée à demeure sur la base de fixation (4) et le premier élément de serrage (6) peut être bloqué sur ladite pièce rapportée (2), et qui comporte une tête (33) et un logement d'outil (35) situé sur ladite tête (33) de la vis, ainsi
- qu'un élément de fixation secondaire (38), pouvant être inséré dans les premier orifice secondaire de passage et second orifice secondaire de passage (12, 23),
le second élément de serrage (17) étant doté d'un second évidement (25) notamment de forme étagée, au niveau du second orifice primaire de passage (22), sachant qu'un diamètre radial (27) du second évidement (25), de fort dimensionnement, est plus grand qu'un diamètre radial maximal (D) de la tête (33) de la vis, et qu'un diamètre radial (26) dudit second évidement (25), de dimensionnement moindre, est plus petit que ledit diamètre radial maximal (D) de ladite tête (33) de la vis,
**caractérisé par le fait que** le premier élément de serrage (6) comporte un premier évidement (14) notamment de forme étagée, au niveau du premier orifice primaire de passage (11), sachant qu'un diamètre radial (16) du premier évidement (14), de fort dimensionnement, est plus grand qu'un diamètre radial maximal (D) de la tête (33) de la vis, et qu'un diamètre radial (15) dudit premier évidement (14), de dimensionnement moindre, est plus petit que ledit diamètre radial maximal (D) de ladite tête (33) de la vis, de façon telle que, dans un état monté du système de fixation (1), lesdits premier évidement (14) et second évidement (25) ceinturent respectivement, au moins en partie par complémentarité de formes, une face inférieure (37) de la tête (33) de la vis et une face supérieure (36) de ladite tête (33) de la vis.

2. Système de fixation (1) selon la revendication 1, **caractérisé par le fait qu'**à l'état monté dudit système de fixation (1), le premier évidement (14) notamment de forme étagée et le second évidement (25) notamment de forme étagée constituent, en association, une structure (28) de type rainure qui ceinture la tête (33) de la vis, au moins en partie par complémentarité de formes.

3. Système de fixation (1) selon la revendication 1 ou 2, **caractérisé par le fait qu'**à l'état monté, le premier élément de serrage (6) et le second élément de serrage (17) reposent l'un sur l'autre au moins approximativement à plat et avec coïncidence en superposition.

4. Système de fixation selon la revendication 2 ou 3, **caractérisé par le fait qu'**une largeur (B) de la structure (28) de type rainure concorde au moins avec une hauteur partielle (H) de la tête (33) de la vis.

5. Système de fixation (1) selon l'une des revendications précédentes, **caractérisé par le fait que** le premier orifice secondaire de passage (12) et le second orifice secondaire de passage (23) sont respectivement pourvus, d'un côté, d'un lamage (13, 24) dédié à la réception d'une tête de vis de l'élément de fixation secondaire (38).

6. Système de fixation (1) selon l'une des revendications précédentes, **caractérisé par le fait que** le premier élément de serrage (6) et le second élément de serrage (17) présentent des réalisations géométriquement identiques.

7. Procédé de montage et d'ajustement d'une pièce (2) rapportée sur une base de fixation (4), à l'aide d'un système de fixation (1) conforme à l'une des revendications précédentes, **caractérisé par le fait que**, lors d'une première étape de montage, la vis primaire (29) est insérée dans le premier orifice primaire de passage (11) du premier élément de serrage (6), de façon telle que la face inférieure (37) de la tête (33) de ladite vis soit en liaison opérante avec le premier évidement (14) dudit premier élément de serrage (6) ; et **par le fait que** ladite vis primaire (29) est insérée, dans une direction d'insertion (E), dans la pièce rapportée (2) et dans la base de fixation (4).

8. Procédé selon la revendication 7, **caractérisé par le fait que** la vis primaire (29) est vissée dans un perçage traversant pré-apprêté, pratiqué dans la pièce rapportée, et dans un perçage concordant avec ledit perçage traversant et pratiqué dans la base de fixation (4), et la face inférieure (37) de la tête (33) de ladite vis applique une force de serrage au premier élément de serrage (6) en contact avec une surface (3) de ladite pièce rapportée (2).

9. Procédé selon la revendication 7 ou 8, **caractérisé par le fait que**, lors d'une étape supplémentaire, le second élément de serrage (17) est enfiché sur la tête (33) de la vis, dans la direction d'insertion (E) de ladite vis primaire (29), de telle sorte que le premier orifice secondaire de passage (12) du premier élément de serrage (6) concorde avec le second orifice secondaire de passage (23) du second élément de serrage (17), et que le premier évidement (14) dudit premier élément de serrage (6) et le second évidement (25) dudit second élément de serrage (17) forment une structure (28) de type rainure qui enveloppe la tête (33) de ladite vis, au moins en partie par complémentarité de formes.

10. Procédé selon la revendication 9, **caractérisé par le fait que** les emplacements mutuels du premier élément de serrage (6), du second élément de serrage (17), de la vis primaire (29) et de la pièce rapportée (2) sont consignés fermement par insertion de l'élément de fixation secondaire (38), dans ladite pièce rapportée (2), en pénétrant dans le premier orifice secondaire de passage (12) et dans le second orifice secondaire de passage (23) concordant, et ledit second élément de serrage (17) est retenu par rapport audit premier élément de serrage (6).

11. Procédé de montage et d'ajustement selon l'une des revendications 7 à 10, **caractérisé par le fait que**, lors d'une étape opératoire supplémentaire, un dévissage de la vis primaire (29) hors de la base de fixation (4) a pour effets d'espacer la pièce rapportée (2) vis-à-vis de ladite base de fixation (4), et donc de la mettre à niveau, la face supérieure (36) de la tête (33) de ladite vis étant alors en contact avec le second évidement (25) du second élément de serrage (17).

12. Procédé de montage et d'ajustement selon la revendication 11, **caractérisé par le fait que**, lors d'une étape opératoire supplémentaire, un espacement entre la base de fixation (4) et la pièce rapportée (2) est comblé par un matériau additionnel offrant une stabilité à la pression, ce qui a pour effet de consigner fermement un emplacement de ladite pièce rapportée (2) mis à niveau vis-à-vis de ladite base de fixation (4).

13. Procédé de montage et d'ajustement selon la revendication 12, **caractérisé par le fait que** le second élément de serrage (17) est dissocié d'avec la pièce rapportée (2), d'avec le premier élément de serrage (6), et d'avec la vis primaire (29), par extraction de l'élément de fixation secondaire (38) hors de ladite pièce rapportée (2).
